# EUROPEAN PATENT SPECIFICATION

(11) **EP 0 331 435 B1**
(45) Date of publication and mention of the grant of the patent: **28.01.1998**
(21) Application number: 89301984.4
(22) Date of filing: 28.02.1989
(51) Int. Cl.: H04B 1/38

(54) **Radio telephone apparatus**
Funkfernsprechgerät
Dispositif de radiotéléphone

(30) Priority: 29.02.1988 JP 46062/88
(43) Date of publication of application: 06.09.1989
(73) Proprietor: KABUSHIKI KAISHA TOSHIBA, Kawasaki-shi, Kanagawa-ken 210 (JP)
(72) Inventor: Aisaka, Hideki, Minato-ku Tokyo (JP); Sawa, Buntaro, Minato-ku Tokyo (JP)
(74) Representative: Shindler, Nigel

(56) References cited:
- EP-A- 0 159 670
- US-A- 4 286 335
- Nec Research and Development, No. 87, Oct. 1987, Tokyo, JP; pages 34-43: Y. TAMURA et al.:"Hand-Held portable equipment for cellular mobile telephone".

## Description

### FIELD OF THE INVENTION

This invention relates to the field of radio telephone apparatus for transmitting signals over a selected radio channel and, more particularly, to an improved radio telephone apparatus which includes a portable unit and an adaptor unit.

### BACKGROUND OF THE INVENTION

Mobile radio telephones are known as radio telephone apparatus used in vehicles such as automobiles. In an automobile telephone, a dial signal and speech signals are input at a handset unit disposed near the seat of the automobile. These signals are transmitted from a transceiver unit installed, for example in the trunk of the automobile, to a base station through which a communication link with a remote land line telephone or a remote radio telephone is established. In such a conventional automobile radio telephone apparatus, the handset unit near the automobile seat cannot be disconnected from the transceiver unit in the trunk. Thus, a user cannot use the apparatus outside the automobile.

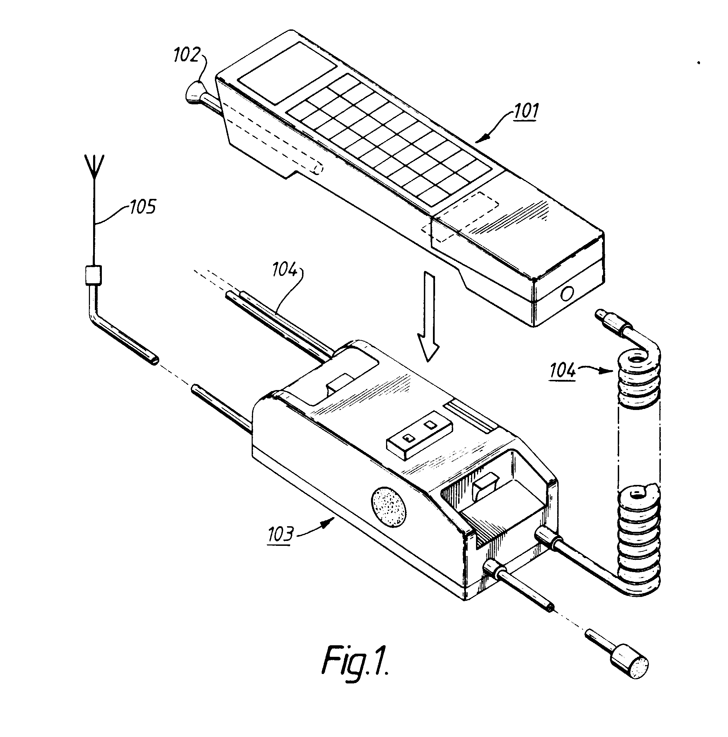

The above-named problems associated with prior art radio telephones are addressed by the radio telephone apparatus described and claimed in an earlier application which describes a radio telephone which can be used either inside or outside an automobile. Fig. 1 is a perspective view of such a radio telephone apparatus. The radio telephone apparatus comprises a portable unit 101 with an antenna 102 and an adaptor unit 103. Portable unit 101 and adaptor unit 103 are connected to each other by a coaxial cable 104. Adaptor unit 103 is supplied with power from a car battery (not shown) through a power cable 106 and is connected to an antenna 105 which is disposed outside the automobile. In this arrangement, both portable unit 1012 and adaptor unit 103 are equipped with radio circuits, so that a user may communicate with another one by using portable unit 101 alone, or portable unit 101 attached to adaptor unit 103.

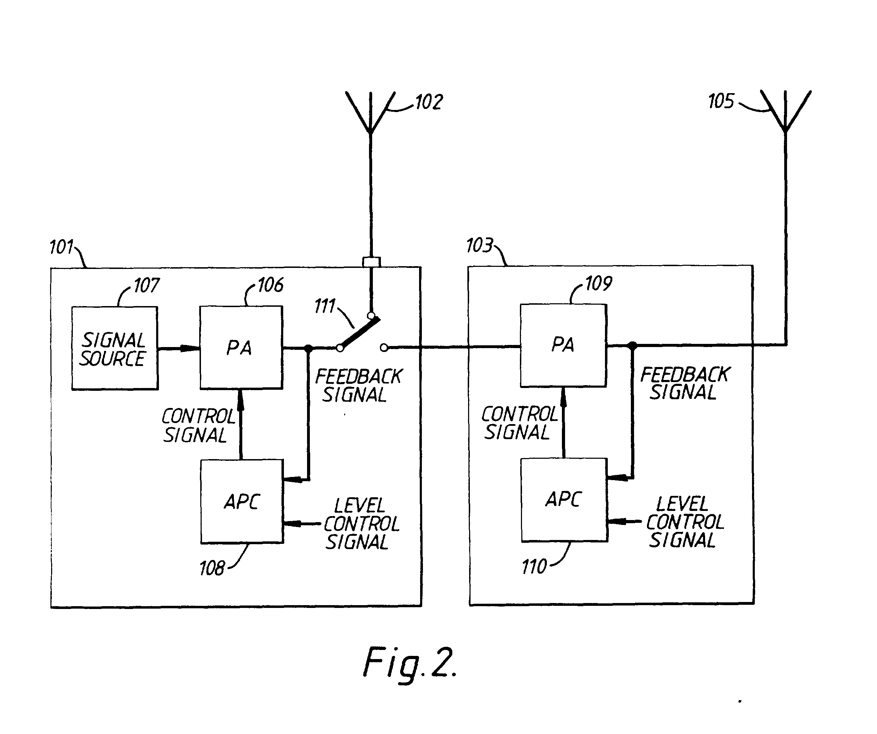

Fig. 2 is a block diagram of a radio circuit which applicants have found may be used in the radio telephone apparatus shown in Fig. 1 in the event that only portable unit 101 is available to the user, the output of power amplifier (PA) 106 is connected via switch 111 to antenna 102 which is provided on portable unit 101. The control and speech signals generated by signal source 107 are thus amplified by PA 106 and then transmitted via antenna 102. The amplification factor of PA 106 is determined by automatic power control circuit (APC) 108. APC 108 determines the amplification factor in response to a level control signal received from a base station (not shown) and a feedback signal provided from an output of PA 106. APC 108 provide a control signal indicative of the amplification factor to PA 106.

In the event that adaptor unit 103 is available to the user along with portable unit 101, the output of PA 106 is connected to the input of power amplifier (PA) 109 via switch 111. Thus, signals generated by signal source 107 are amplified by PA 106 and PA 109 and then transmitted via antenna 105. In this configuration, APC 108 controls PA 106 in response to the level control signal and the feedback signal. Also, an automatic power control circuit (APC) 110 in adaptor unit 103 controls PA 109 in response to a level control signal from the base station and a feedback signal provided from an output of PA 109.

Through the radio telephone apparatus illustrated in Figure 2 represents a substantial improvement over such apparatus known in the prior art, it remains deficient in a number of respects. One such deficiency is that it is difficult to control the power level of the final amplifier stage, i.e. the output level of PA 109. This is because the input level to PA 109, i.e. the output level of PA 106 fluctuates in response to the control signal provided from APC 108.

From EP-A3-0 159 670 there is known a radio communication device which comprises a portable communication device and a power amplifier device adapted to accommodating the portable communication device thereinto for amplifying a transmitter output therefrom. The radio communication device further comprises a detector circuit for detecting that an electrical coupling between the portable communication device and the power amplifier device, thereby effecting a control such that the transmitter output power level is kept at a minimum input level required for the power amplifier device. Thus, this can suppress excessive heat generation in the communication device when the portable communication device is used by being accomodated in the power amplifier device.

Accordingly the present invention seeks to provide an improved radio telephone apparatus including a portable unit and an adaptor unit in which transmission power level can be readily controlled.

The present invention also seeks to provide a portable unit capable of being attached to an adaptor unit wherein the output power level of the radio circuits in the portable unit is stable.

Accordingly one aspect of the invention provides a portable radio telephone apparatus capable of being selectively connected to an adaptor unit for transmitting a radio frequency signal at a certain power level responsive to a level control signal received from a base station, said radio telephone apparatus comprising:
amplifying means for amplifying said radio frequency signal by an amplification factor;
radiating means for radiating said amplified radio frequency signal;
an operator actuatable switch coupled to an output of said amplifying means and selectively coupled to said radiating means and said adaptor unit for selectively applying the output signals of said amplifying means either to said adaptor unit in a first state, or to said radiating means in a second state;
control means coupled to said amplifying means and to said operator actuatable switch and responsive to said level control signal for controlling said amplifying means so that said amplification factor of said amplifying means is fixed at a predetermined level when said operator actuatable switch is in the first state and so that said amplification factor of said amplifying means is variable in response to said level control signal when said operator actuatable switch is in the second state.

Accordingly responsive to an actuation of the operator actuatable switch, an amplification factor to be provided to the amplifier in the portable unit can be fixed at a predetermined value, and thus the output power level of the amplifier becomes stable without fluctuating in response to a level control signal or a feedback signal. Therefore, in the event that the portable unit is connected to the adaptor unit, the output power level of the adaptor can be accurately controlled in response to the level control signal.

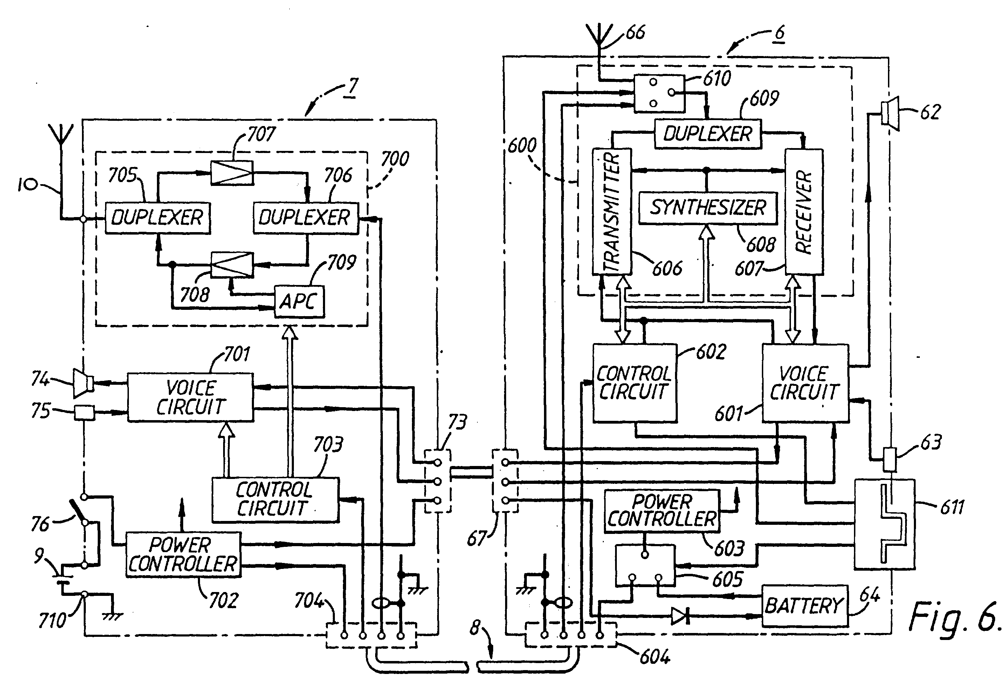

Further, to provide a radio telephone capable of transmitting and receiving radio frequency signals, an arrangement for receiving the signals is to be added to the above discussed radio circuitry of Figure 2. U.S. patent no. 4,636,741 to Mitzlaff discloses several multi-level power amplifying circuits for a portable radio transceiver attachable to a vehicle adaptor. In particular, Figure 6 of the Mitzlaff patent discloses a multi-level power amplifying circuitry wherein both of the portable unit and the adaptor have a power control circuitry. According to the arrangement disclosed in Figure 6, since the transceiver is connected with the adaptor by plug, the transceiver becomes unsuitable for handheld use and, accordingly, an additional handset is needed.

One possibility is to use cables between the transceiver and the adaptor. According to the prior art arrangement, however, to connect the transceiver with the adaptor, two cables are required, i.e. one is for transmission and one for reception. A coaxial cable is typically used for transmitting high frequency signals. Since the coaxial cable is thicker and harder than a normal conductive lead line, if the two coaxial cables are twisted into a cable line, the cable line becomes still thicker and harder thereby the operability of the transceiver attached to the adaptor turns out to be worse.

Against this background a second preferred, aspect of the invention provides a radio telephone apparatus comprising a portable unit, an adaptor unit connectable to the portable unit through a cable, and a first antenna associated with the adaptor unit, wherein:
the portable unit includes:
a signal source for generating transmission signals to be transmitted;
modulator means connected to the signal source for modulating the transmission signals generated by the signal source;
first amplifying means connected to the modulator means for amplifying the transmission signals modulated by the modulator means on the basis of a first amplification factor;
a second antenna for receiving and transmitting radio frequency signals;
a first terminal connected to the second antenna;
a second terminal connected to a connector of the portable unit;
a third terminal;
first duplexer means connected to the third terminal and the first amplifying means for applying the transmission signals amplified by the first amplifying means to the third terminal and for receiving reception signals from the third terminal and providing the reception signals to a reception terminal of the first duplexer means;
receiver means connected to the reception terminal of the first duplexer means for receiving the reception signals from the first duplexer means;
switching means for selectively connecting the third terminal to either the first terminal in a first state or the second terminal in a second state; and
first control means for providing the first amplification factor responsive to a level control signal received from base station when said switching means is in the first state, or for fixing the amplification factor at a predetermined level when said switching means is in the second state;
and wherein the adaptor unit includes: second duplexer means connected to a connector of the adaptor unit for receiving transmission signals from the connector of the adaptor unit and for applying reception signals to the connector of the adaptor unit;
second amplifying means connected to the second duplexer means for amplifying the transmission signals from the second duplexer means on the basis of a second amplification factor;
second control means coupled to the output of the second amplifying means for providing the second amplification factor in response to the output signal level of the second amplifying means and the level control signal; and
third duplexer means connected to the second duplexer, the first antenna, and the output of the second amplifying means for applying the reception signals from the first antenna to the second duplexer means and applying the transmission signals amplified by the second amplifying means to the first antenna;
and wherein the cable includes:
a single cable coupled to the connectors of both of the portable unit and the adaptor unit for carrying the transmission and reception signals.

Some embodiments of the invention will now be described by way of example with reference to the accompanying drawings in which:
Figure 1 is a perspective view of the previously proposed radio telephone mentioned above;
Figure 2 is a block diagram of a radio circuit used in the radio telephone apparatus shown in Figure 1;
Figure 3 is a schematic block diagram of a radio transmission circuit used in a radio telephone apparatus in accordance with an embodiment of the present invention;
Figure 4 is a schematic diagram of automatic power control circuit 305 shown in Figure 3;
Figure 5 is a structural diagram of switching circuit 303 shown in Figure 3;
Figure 6 is a block diagram of a mobile telephone in accordance with another embodiment of the present invention;
Figure 7(a) and (b) are structural diagrams of switch circuit 611 shown in Figure 6;
Figure 8 is a block diagram of transmitter 606 shown in Figure 6.

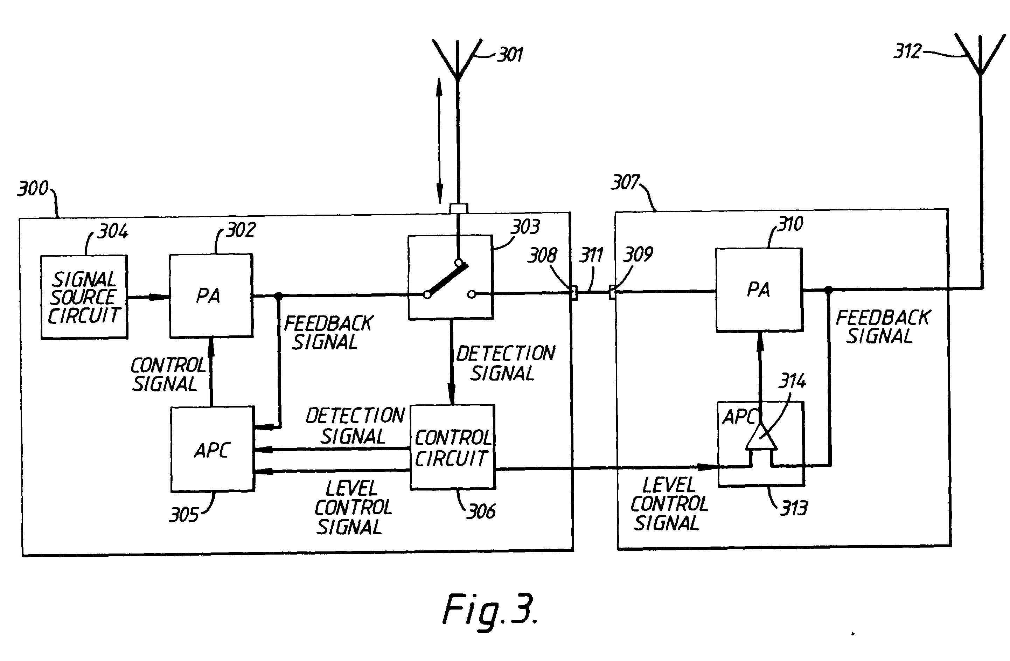

Referring to the drawings, Figure 3 is a block diagram of a radio transmission circuit used in the radio telephone apparatus according to one embodiment of the present invention.

The apparatus includes a retractable antenna 301 which is connected to the output of a power amplifier (PA) 302 by a switch 303 when the antenna is extended. Then radio frequency signals are provided from a signal source circuit 304. These signals are control signals and speech signals to be transmitted and are radiated from antenna 301 after being amplified by PA 302. A portion of the output signal from PA 302 is coupled to an automatic power control circuit (APC) 305 as a feed back signal. Also, switching circuit 303 sends a detection signal (an on state signal) indicative of the extension of antenna 301 to APC 305 via a control circuit 306. Responsive to the detection signal, APC 305 controls PA 302 so that the amplification factor of PA 302 is variable in response to a level control signal. PA 302 changes its amplification in response to the voltage of a control signal provided from APC 305. The level control signal is transmitted from a base station and is received by a radio reception circuit (not shown in Figure 3), and is provided to APC 305 from control circuit 306.

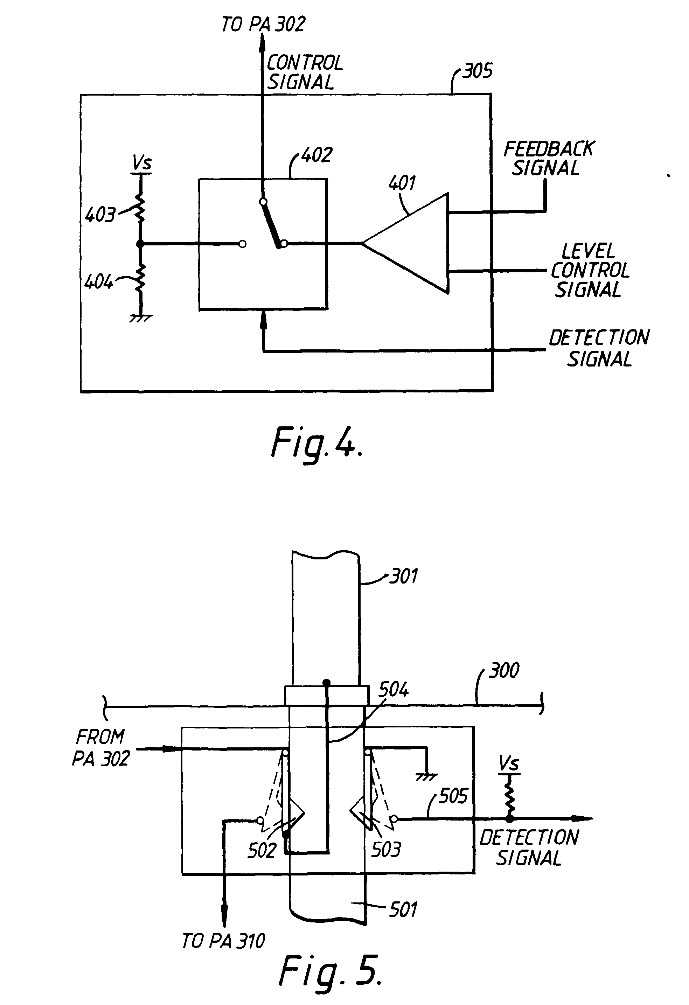

Fig. 4 is a schematic block diagram of APC 305. The level control signal is compared to the feedback signal by a comparator circuit 401. When antenna 301 is extended, responsive to the detection signal, a connection in switching section 402 is made so that an output of comparator circuit 401 is applied to PA 302.

Thus, by extending antenna 301, portable unit 300 is able to transmit a radio frequency signal having a magnitude responsive to the level control signal without the adaptor unit. It should be noted that the switching operations in switching circuit 303 (Fig.3) and switching section 402 (Fig.4) depend on the extension of antenna 301 is provided at portable unit 300, not on the connection between portable unit 300 and adaptor unit 307. Therefore, it is not necessary in this invention to detect a connection between portable unit 3000 and adaptor unit 307 and thereby a connection line for detecting the connection relationship is not needed.

Referring to Fig 3 again, when antenna 301 is retracted the output of a PA 302 is coupled to an output terminal 308 Output terminal 308 is coupled to an input terminal 309 connected to a power amplifier (PA) 310 of adaptor unit 307 through coaxial cable 311. Accordingly, the output signals from PA 302 is applied to the input of PA 310 The applied signals are radiated from antenna 312 after being amplified by PA 310. A portion of the output signal from PA 310 is lead to an automatic power control circuit (APC) 313 as a feedback signal. Also, switching circuit 303 sends a detection signal (an off state signal) indicative of the retracted condition of antenna 301 to APC 305 via control circuit 306 Responsive to the detection signal, APC 305 controls PA 302 so that the amplification factor of PA 302 is fixed to a predetermined one

Referring to Fig 4 again, responsive to the detecting signal (an off state signal), the connection relationship in switching section 402 is changed so that a predetermined voltage magnitude, which is provided from a power supply voltage Vs properly divided by resistors 403 and 404, is applied to PA 302. The amplification magnitude of PA 302 is determined so that the output power level of portable unit 300 does not exceed a power level which the lowest level control signal requires the apparatus.

The level control signal provided from control circuit 306 also is applied to APC 313 In APC 313, the level control signal is compared with the feedback signal from the output of PA 310 by a comparator circuit 314. An output of comparator circuit 314 is applied to PA 310

Thus, on retraction of antenna 301, a radio frequency signal is amplified at a predetermined amplification magnitude in portable unit 300. The amplified radio frequency signal is coupled to adaptor unit 307 and further amplified at an amplification magnitude responsive to the level control signal in adaptor unit 307.

Fig. 5 is a structural diagram of switching circuit 303 shown in Fig. 3. A socket 501 is provided to accommodate antenna 301. In a side wall of socket 501, two switches 502 and 503 are provided so as to be pushed aside when antenna 301 is retracted into socket 501. One end of switch 502 is connected to the output of PA 302. A lead 504 extends from antenna 301 so that the contact of switch 502 is connected with antenna 301 through the lead line 504 when antenna 301 is extended When antenna 301 is retracted, switch 502 is pushed aside and then the other end of switch 502 is connected to the input of PA 310 Switch 503 is used for generating the detection signal indicative of the state of antenna 301

If antenna 301 is extended, the detection signal is at a high level since signal line 505 with its voltage level being pulled up by a power supply voltage Vs does not make contact with switch 503 If antenna 301 is retracted into socket 501, the detection signal keeps low level since signal line 505 contacts with one end of switch 503 and the other end of switch 503 is connected to ground.

Another embodiment of the present invention applied to a mobile telephone consisting of a portable unit and an adaptor unit will be described. Fig. 6 is a block diagram showing the arrangement of the mobile telephone according to this embodiment.

A portable unit 6 comprises an antenna 66, a duplexer 609, a receiver 607, a transmitter 606, a synthesizer 608, a voice circuit 601, a control circuit 602, a power controller 603, a battery 64, a speaker 62, a microphone 63, switch circuits 605, 610, and 611, a connection terminal 67 and a cable connector 604.

An adaptor unit 7 comprises a booster unit 700, a voice circuit 701, a power controller 702, a control circuit 703, an antenna 10, a loudspeaker 74, a microphone 75, a power switch 76, a connection terminal 73, a cable connector 704, and a battery connector 710. Booster unit 700 comprises duplexers 705 and 706, a reception amplifier 707, a transmission power amplifier 708, and an automatic power control circuit (APC) 709. A car battery is connected to battery connector 710.

Portable unit 6 is connected to adaptor unit 7 via a coaxial cable 8 connected to cable connectors 604 and 704. Also, portable unit 6 is directly connected to adaptor unit 7 through connection terminals 67 and 73.

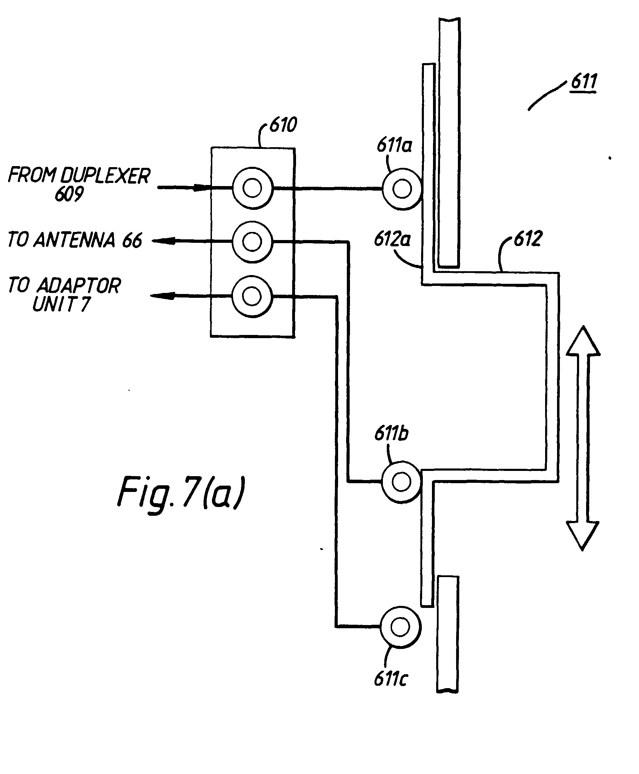

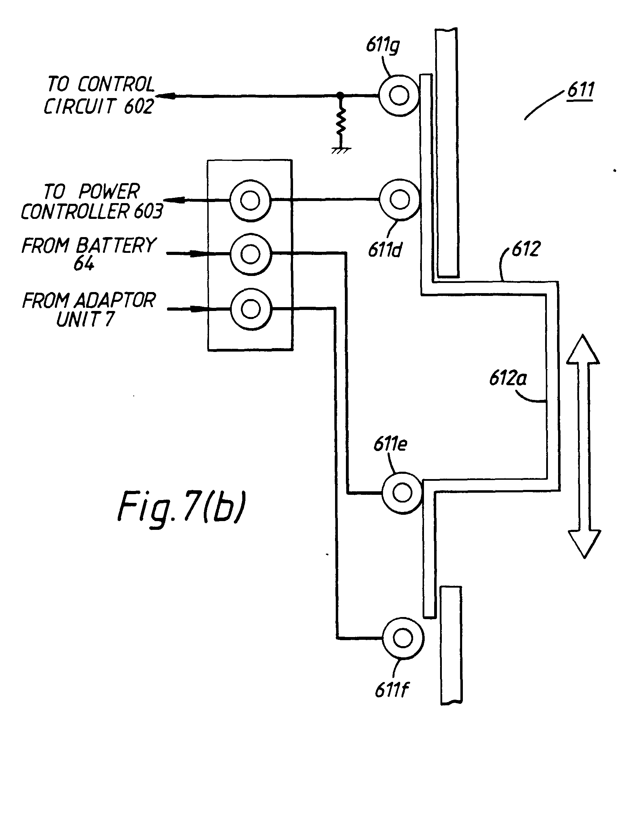

Fig. 7(a) and (b) are structural diagrams of switch circuit 611 in portable unit 6. Referring to Fig. 7(a), a strip line is provided at an inside surface 612a of switch 612. A terminal 611a is connected to duplexer 609. A terminal 611b is connected to antenna 6b. A terminal 611c is connected to adaptor unit 7 through coaxial cable 8. If switch 612 is moved to the high position in Fig. 7(a), terminal 611a is connected to terminal 611b through the strip line. Accordingly, duplexer 609 is coupled to antenna 66. If switch 612 is moved to the low position in Fig. 7(a), terminal 611a is connected to terminal 611c through the strip line. Accordingly, duplexer 609 is coupled to duplexer 706 in adaptor unit 7 through coaxial cable 8. A transmission line between antenna 66 and duplexer 609 or between duplexer 706 and duplexer 609 is consisting of a strip line and a metalic line for transmitting radio frequency signals.

Likewise, referring to Fig. 7(b), a lead line is provided at an inside surface 612a of switch 612. A terminal 611d is connected to power controller 603. A terminal 611e is connected from battery 64. A terminal 611f is connected from adaptor unit 7 through coaxial cable 8. If switch 612 is moved to the high position in Fig. 7(b), terminal 611d is connected to terminal 611e through the lead line. Accordingly, power controller 603 is connected to battery 64. If switch 612 is moved to the low position in Fig. 7(b), terminal 611d is connected to terminal 611f through the lead line. Accordingly, power controller 603 is connected to power controller 702 in a adaptor unit 7 through coaxial cable 8. Also, a terminal 611g is provided at the end of switch 612. Terminal 611g is connected from control circuit 602 as an input of the detection signal. Since power controller 603 is supplied power from battery 74 or power controller 702 in adaptor unit 7, the voltage level of the lead line of switch 612 is in an on state. Therefore, if switch 612 is moved toward above in Fig. 7(b), the voltage of switch 612 is applied to terminal 611g and the input to control circuit 602 becomes on state. Conversely, if switches 612 is moved to the low position, the input to control circuit 602 becomes an off state.

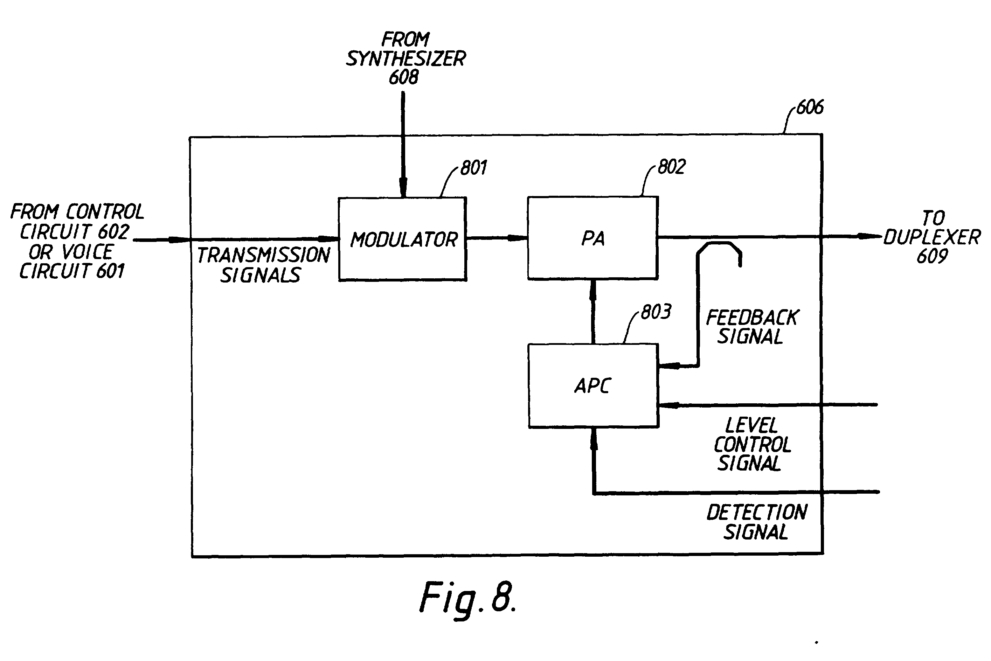

Fig. 8 is a block diagram of transmitter 606 shown in Fig. 6. Control signals from control circuit 602 or speech signals from voice circuit 601 are applied to a modulator 801. Modulator 801 modulates the applied signals on the basis of a modulation frequency signal provided from synthesizer 608. The modulated signals are applied to a power amplifier (PA) 802. PA 802 amplifiers the applied signals at an amplification factor provided from an automatic power control circuit (APC) 803. APC 803 has the same arrangement of APC 305 shown in Fig. 4. APC 803 provides an amplification factor to PA 802 in response to a feedback signal, a level control signal, and the detection signal from switch circuit 611. The amplified signals are applied to duplexer 609.

When switch 612 is moved to the high position in Fig. 7(a) and (b), power controller 603 is supplied power from battery 64 and duplexer 609 is coupled to antenna 66. Also, control circuit 602 receives the detection signal (an on state signal) from switch 611. Responsive to the detection signal, control circuit 602 sends a control signal to switch section 402 (Fig. 4) of APC 803 so that the output of comparator 401 (Fig. 4) is applied to PA 802 as an amplification factor. Accordingly, each section of portable unit 6 is supplied power from battery 64 via power controller 603. And, when the transmission signals provided from control circuit 602 or voice circuit 601 are applied to transmitter 606, these signals are amplified in PA 802 of transmitter 606 at an amplification factor responsive to the level control signal and the feedback signal. The amplified signals are applied to duplexer 609 and radiated from antenna 66.

On the other hand, when switch 612 remains in the low position in Fig. 7(a) and (b), if power switch 76 of adaptor unit 7 is closed, power controller 603 is supplied power from car battery a via power controller 702 through coaxial cable 8. And duplexer 609 is coupled to duplexer 706 through coaxial cable 8. Also, control circuit 602 receives the detection signal (an off state signal) from switch circuit 611. Responsive to the detection signal, control circuit 602 sends a control signal to switch section 402 (Fig. 4) of APC 803 so that a fixed voltage divided by registers 403 and 404 is applied to PA 802 as an amplification factor. Also, control circuit 602 provides a level control signal to APC 709 in adaptor unit 7 through coaxial cable 8. Accordingly, each section of both of portable unit 6 and adaptor unit 7 is supplied power from car battery 9 via power controller 603 and 702. And, when the transmission signals provided from control circuit 602 or voice circuit 601 are applied to transmitter 606, these signals are amplified in PA 802 of transmitter 606 at amplification factor responsive to the fixed voltage.

The amplified signals are coupled to duplexer 706 via coaxial cable 8 and applied to PA 708. APC 709 compares a level control signal with a feedback signal from the output of PA 708 and provides an output signal of the comparison to PA 708 as an amplification factor. So, the signals applied to PA 708 is amplified at an amplification factor responsive to the level control signal and the feedback signal. The signals amplified by PA 708 are applied to duplexer 609 and radiated from antenna 661.

## Claims

1. A portable radio telephone apparatus (6) capable of being selectively connected to an adaptor unit (7) for transmitting a radio frequency signal at a certain power level responsive to a level control signal received from a base station, said radio telephone apparatus comprising:
amplifying means (302) for amplifying said radio frequency signal by an amplification factor;
radiating means (301) for radiating said amplified radio frequency signal;
an operator actuatable switch (303) coupled to an output of said amplifying means (302) and selectively coupled to said radiating means (301) and said adaptor unit (307) for selectively applying the output signals of said amplifying means (302) either to said adaptor unit (307) in a first state, or to said radiating means (301), in a second state;
control means (305) coupled to said amplifying means and to said operator actuatable switch (303) and responsive to said level control signal for controlling said amplifying means (302) so that said amplification factor of said amplifying means (302) is fixed at a predetermined level when said operator actuatable switch (303) is in the first state and so that said amplification factor of said amplifying means (302) is variable in response to said level control signal when said operator actuatable switch (303) is in the second state.

2. The apparatus of claim 1 wherein said radiating means comprises an antenna (301) capable of being extended and said operator actuatable switch (303) is activated in cooperation with the extension of said antenna.

3. The apparatus of claim 1 further comprises power supply means for supplying power to each section of said apparatus when said operator actuatable switch is actuated.

4. A radio telephone apparatus comprising a portable unit (6), an adaptor unit (7) connectable to the portable unit through a cable (8), and a first antenna (10) associated with the adaptor unit, wherein:
the portable unit includes:
a signal source (601, 602) for generating transmission signals to be transmitted;
modulator means (801) connected to the signal source for modulating the transmission signals generated by the signal source;
first amplifying means (802) connected to the modulator means for amplifying the transmission signals modulated by the modulator means on the basis of a first amplification factor;
a second antenna (66) for receiving and transmitting radio frequency signals;
a first terminal (611b) connected to the second antenna;
a second terminal (611c) connected to a connector of the portable unit;
a third terminal (611a) ;
first duplexer means (609) connected to the third terminal and the first amplifying means (802) for applying the transmission signals amplified by the first amplifying means to the third terminal (611a) and for receiving reception signals from the third terminal and providing the reception signals to a reception terminal of the first duplexer means;
receiver means (607) connected to the reception terminal of the first duplexer means (609) for receiving the reception signals from the first duplexer means;
switching means (611,612,612a) for selectively connecting the third terminal (611a) to either the first terminal (611b) in a first state or the second terminal (611c) in a second state; and
first control means (305) for providing the first amplification factor responsive to a level control signal received from base station when said switching means is in the first state, or for fixing the amplification factor at a predetermined level when said switching means is in the second state;
and wherein the adaptor unit includes: second duplexer means (706) connected to a connector (704) of the adaptor unit for receiving transmission signals from the connector of the adaptor unit and for applying reception signals to the connector (704) of the adaptor unit;
second amplifying means (708) connected to the second duplexer means (706) for amplifying the transmission signals from the second duplexer means (706) on the basis of a second amplification factor;
second control means (709) coupled to the output of the second amplifying means (708) for providing the second amplification factor in response to the output signal level of the second amplifying means (708) and the level control signal; and
third duplexer means (705) connected to the second duplexer means (706), the first antenna (10), and the output of the second amplifying means (708) for applying the reception signals from the first antenna to the second duplexer means and applying the transmission signals amplified by the second amplifying means to the first antenna;
and wherein the cable (8) includes:
a single cable coupled to the connectors of both of the portable unit and the adaptor unit for carrying the transmission and reception signals.

5. A radio telephone apparatus according to claim 4, wherein the switching means (611,612,612a) connects the third terminal (611a) to the first terminal (611b) when the connector (604) of the portable unit is not connected with the connector (704) of the adaptor unit.

6. A radio telephone apparatus according to claim 4, wherein the portable unit comprises a first battery (64) and the portable unit is supplied with power from the first battery (64) when the connector (604) of the portable unit is not connected with the connector (704) of the adaptor unit and wherein the portable unit and the adaptor unit are supplied with power from a second battery (9), when the connector (604) of the portable unit is connected with the connector (704) of the adaptor unit through a power supply line in the cable.

## Patentansprüche

1. Tragbares Funkfernsprechgerät (6), das wahlweise mit einer Adaptereinheit (7) verbunden werden kann, um abhängig von einem von einer Basisstation empfangenen Pegelsteuersignal ein Radiofrequenzsignal mit einem bestimmten Leistungspegel auszusenden, wobei das Funkfernsprechgerät aufweist:
eine Verstärkereinrichtung (302) zum Verstärken des Radiofrequenzsignals mit einem Verstärkungsfaktor;
eine Sendeeinrichtung (301) zum Aussenden des verstärkten Radiofrequenzsignals;
einen vom Benutzer betätigbaren Schalter (303), der mit einem Ausgang der Verstärkereinrichtung (302) verbunden ist und wahlweise mit der Sendeeinrichtung (301) und der Adaptereinheit (307) verbunden ist, um die Ausgangssignale von der Verstärkereinrichtung (302) wahlweise entweder in einem ersten zustand der Adaptereinheit (307) oder in einem zweiten Zustand der Sendeeinrichtung (301) zuzuführen;
eine Steuereinrichtung (305), die mit der Verstärkereinrichtung und dem vom Benutzer betätigbaren Schalter (303) verbunden ist und auf das Pegelsteuersignal anspricht, um die Verstärkereinrichtung (302) so zu steuern, daß der Verstärkungsfaktor der Verstärkereinrichtung (302) auf einen bestimmten Wert fest eingestellt ist, wenn sich der vom Benutzer betätigbare Schalter (303) in dem ersten Zustand befindet, und der Verstärkungsfaktor der Verstärkereinrichtung (302) abhängig von dem Pegelsteuersignal veränderbar ist, wenn sich der vom Benutzer betätigbare Schalter (303) in dem zweiten Zustand befindet.

2. Gerät nach Anspruch 1, bei dem die Sendeeinrichtung eine Antenne (301) umfaßt, die dazu ausgestaltet ist, um ausgezogen zu werden, und bei dem der vom Benutzer betätigbare Schalter (303) durch das Ausziehen der Antenne betätigt wird.

3. Gerät nach Anspruch 1, das außerdem eine Stromversorgungseinrichtung aufweist, um jedes Teil des Geräts mit Strom zu versorgen, wenn der vom Benutzer betätigbare Schalter betätigt ist.

4. Funkfernsprechgerät mit einer tragbaren Einheit (6), einer Adaptereinheit (7), die durch ein Kabel (8) an die tragbare Einheit angeschlossen werden kann, und einer mit der Adaptereinheit gekoppelten ersten Antenne (10), wobei:
die tragbare Einheit aufweist:
eine Signalquelle (601, 602) zum Erzeugen von auszusendenden Sendesignalen;
eine Modulatoreinrichtung (801), die mit der Signalquelle verbunden ist, um die von der Signalquelle erzeugten Sendesignale zu modulieren;
eine erste Verstärkereinrichtung (802), die mit der Modulatoreinrichtung verbunden ist, um auf der Basis eines ersten Verstärkungsfaktors die von der Modulatoreinrichtung modulierten Sendesignale zu verstärken;
eine zweite Antenne (66) zum Empfangen und Aussenden von Radiofrequenzsignalen;
einen ersten Anschluß (611b), der mit der zweiten Antenne verbunden ist;
einen zweiten Anschluß (611c), der mit einer Anschlußstecker der tragbaren Einheit verbunden ist;
einen dritten Anschluß (611a);
eine erste Duplexer-Einrichtung (609), die mit dem ersten Anschluß und der ersten Verstärkereinrichtung (802) verbunden ist, um die von der ersten Verstärkereinrichtung verstärkten Sendesignale dem dritten Anschluß (611a) zuzuführen und um von dem dritten Anschluß Empfangssignale zu empfangen und um die Empfangssignale einem Empfangsanschluß der ersten Duplexer-Einrichtung zuzuführen;
eine Empfangseinrichtung (607), die mit dem Empfangsanschluß der ersten Duplexer-Einrichtung (609) verbunden ist, um die Empfangssignale von der ersten Duplexer-Einrichtung zu empfangen;
eine Schaltereinrichtung (611, 612, 612a), um wahlweise den dritten Anschluß (611a) entweder in einem ersten Zustand mit dem ersten Anschluß (611b) oder in einem zweiten Zustand dem zweiten Anschluß (611c) zu verbinden; und
eine erste Steuereinrichtung (305), um in Reaktion auf ein von der Basisstation empfangenes Pegelsteuersignal den ersten Verstärkungsfaktor zu liefern, wenn sich die Schaltereinrichtung im ersten Zustand befindet, oder um den Verstärkungsfaktor auf einen bestimmten Wert fest einzustellen, wenn sich die Schaltereinrichtung im zweiten Zustand befindet;
und wobei die Adaptereinheit aufweist: eine zweite Duplexer-Einrichtung (706), die mit einem Anschlußstecker (704) der Adaptereinrichtung verbunden ist, um Sendesignale von dem Anschlußstecker der Adaptereinheit zu empfangen und um dem Anschlußstecker (704) der Adaptereinheit Empfangssignale zuzuführen;
eine zweite Verstärkereinrichtung (708), die mit der zweiten Duplexer-Einrichtung (706) verbunden ist, um die Sendesignale von der zweiten Duplexer-Einrichtung (706) auf der Basis eines zweiten Verstärkungsfaktors zu verstärken;
eine zweite Steuereinrichtung (709), die mit dem Ausgang der zweiten Verstärkereinrichtung (708) verbunden ist, um den zweiten Verstärkungsfaktor abhängig von dem Ausgangssignalpegel der zweiten Verstärkereinrichtung (708) und dem Pegelsteuersignal bereitzustellen; und
eine dritte Duplexer-Einrichtung (705), die mit der zweiten Duplexer-Einrichtung (706), der ersten Antenne (10) und dem Ausgang der zweiten Verstärkereinrichtung (708) verbunden ist, um der zweiten Duplexer-Einrichtung die Empfangssignale von der ersten Antenne zuzuführen und um der ersten Antenne die von der zweiten Verstärkereinrichtung verstärkten Sendesignale zuzuführen;
und wobei das Kabel (8) aufweist:
ein einzelnes Kabel, das mit den Anschlußsteckern von sowohl der tragbaren Einheit als auch von der Adaptereinheit verbunden ist, um die Sende- und Empfangssignale zu übertragen.

5. Funkfernsprechgerät nach Anspruch 4, bei dem die Schaltereinrichtung (611, 612, 612a) den dritten Anschluß (611a) mit dem ersten Anschluß (611b) verbindet, wenn der Anschlußstecker (604) der tragbaren Einheit nicht mit dem Anschlußstecker (704) der Adaptereinheit verbunden ist.

6. Funkfernsprechgerät nach Anspruch 4, bei dem die tragbare Einheit eine erste Batterie (64) enthält und die tragbare Einheit von der ersten Batterie (64) mit Strom versorgt wird, wenn der Anschlußstecker (604) der tragbaren Einheit nicht mit dem Anschlußstecker (704) der Adaptereinheit verbunden ist, und bei dem die tragbare Einheit und die Adaptereinheit von einer zweiten Batterie (9) mit Strom versorgt werden, wenn der Anschlußstecker (604) der tragbaren Einheit durch eine Stromversorgungsleitung in dem Kabel mit dem Anschlußstecker (704) der Adaptereinheit verbunden ist.

## Revendications

1. Dispositif de radiotéléphone portable (6) qui peut être connccté, de manière sélective, à une unité d'adaptation (7) pour transmettre un signal radiofréquence à un certain niveau de puissance en réponse à un signal de contrôle de niveau reçu à partir d'une station de base, ledit dispositif de radiotéléphone comprenant :
des moyens d'amplification (302) destines à amplifier ledit signal radiofréquence d'un degré d'amplification ; des moyens de rayonnement (301) destinés à rayonner ledit signal radiofréquence amplifié ;
un commutateur susceptible d'être actionné par l'opérateur (303), couplé à une sortie desdits moyens d'amplification (302) et couplé de manière sélective auxdits moyens de rayonnement (301) et à ladite unité d'adaptation (207) pour appliquer, de manière sélective, les signaux de sortie desdits moyens d'amplification (302) soit à ladite unité d'adaptation (307) dans un premier état, soit auxdits moyens de rayonnement (301), dans un second état ;
des moyens de contrôle (305) couplés auxdits moyens d'amplification et audit commutateur susceptible d'être actionné par l'opérateur (303) et sensibles audit signal de contrôle de niveau pour contrôler lesdits moyens d'amplification (302), de sorte que ledit degré d'amplification desdits moyens d'amplification (302) soit fixé à un niveau prédéterminé lorsque ledit commutateur susceptible d'être actionné par l'opérateur (303) est dans le premier état et de sorte que ledit degré d'amplification desdits moyens d'amplification (302) soit variable en réponse audit signal de contrôle de niveau lorsque ledit commutateur susceptible d'être actionné par l'opérateur (303) est dans le second état.

2. Dispositif selon la revendication 1, dans lequel lesdits moyens de rayonnement comprennent une antenne (301) qui peut être étendue et ledit commutateur susceptible d'être actionné par l'opérateur (303) est activé en coopération avec l'extension de ladite antenne.

3. Dispositif selon la revendication 1 comprenant, de plus, des moyens d'alimentation destinés à fournir la puissance à chaque section dudit dispositif lorsque ledit commutateur susceptible d'être actionné par l'opérateur est actionné.

4. Dispositif de radiotéléphone comprenant une unité portable (6), une unité d'adaptation (7) qui peut être connectée à l'unité portable à travers un câble (8) et une première antenne (10) associée à l'unité adaptation, dans lequel :
l'unité portable comprend :
une source de signal (601, 602) pour générer des signaux de transmission à transmettre ;
des moyens de modulation (801) connectés à la source de signal pour moduler les signaux de transmission générés par la source de signal ;
des premiers moyens d'amplification (802) connectés aux moyens de modulation pour amplifier les signaux de transmission modulés par les moyens de modulation sur la base d'un premier degré d'amplification ;
une seconde antenne (66) pour recevoir et transmettre des signaux radiofréquence ;
une première borne (611b) connectée à la seconde antenne ;
une seconde borne (611c) connectée à un connecteur de l'unité portable ;
une troisième borne (611a) ;
des premiers moyens formant duplexeur (609) connectés à la troisième borne et aux premiers moyens d'amplification (802) pour appliquer les signaux de transmission amplifiés par les premiers moyens d'amplification à la troisième borne (611a) et pour recevoir les signaux de réception provenant de la troisième borne et délivrer les signaux de réception à une borne de réception des premiers moyens formant duplexeur ;
des moyens de réception (607) connectés à la borne de réception des premiers moyens formant duplexeur (609) pour recevoir les signaux de réception provenant des premiers moyens formant duplexeur ;
des moyens de commutation (611, 612, 612a) pour connecter, de manière sélective, la troisième borne (611a) soit à la première borne (611b) dans un premier état, soit à la seconde borne (611c) dans un second état ; et
des premiers moyens de contrôle (305) pour fournir le premier degré d'amplification en réponse à un signal de contrôle de niveau reçu à partir de la station de base lorsque lesdits moyens de commutation sont dans le premier état, ou pour fixer le degré d'amplification à un niveau prédéterminé lorsque lesdits moyens de commutation sont dans le second état ;
et dans lequel l'unité d'adaptation comprend :
des seconds moyens formant duplexeur (706) connectés à un connecteur (704) de l'unité d'adaptation pour recevoir les signaux de transmission provenant du connecteur de l'unité d'adaptation et pour appliquer les signaux de réception au connecteur (704) de l'unité d'adaptation ;
des seconds moyens d'amplification (708) connectés aux seconds moyens formant duplexeur (706) pour amplifier les signaux de transmission provenant des seconds moyens formant duplexeur (706) sur la base d'un second degré d'amplification ;
des seconds moyens de contrôle (709) couplés à la sortie des seconds moyens d'amplification (708) pour fournir le second degré d'amplification en réponse au niveau de signal de sortie des seconds moyens d'amplification (708) et au signal de contrôle de niveau ; et
des troisièmes moyens formant duplexeur (705) connectés aux seconds moyens formant duplexeur (706), à la première antenne (10) et à la sortie des seconds moyens d'amplification (708) pour appliquer les signaux de réception provenant de la première antenne aux seconds moyens formant duplexeur et appliquer les signaux de transmission amplifiés par les seconds moyens d'amplification à la première antenne ; et
dans lequel le câble (8) comprend :
un câble unique couplé aux connecteurs à la fois de l'unité portable et de l'unité d'adaptation pour transporter les signaux de transmission et de réception.

5. Dispositif de radiotéléphone selon la revendication 4, dans lequel les moyens de commutation (611, 612, 612a) connectent la troisième borne (611a) à la première borne (611b) lorsque le connecteur (604) de l'unité portable n'est pas connecté au connecteur (704) de l'unité d'adaptation.

6. Dispositif de radiotéléphone selon la revendication 4, dans lequel l'unité portable comprend une première batterie (64) et l'unité portable est alimentée en puissance à partir de la première batterie (64) lorsque le connecteur (604) de l'unité portable n'est pas connecté au connecteur (704) de l'unité d'adaptation et dans lequel l'unité portable et l'unité d'adaptation sont alimentées en puissance à partir d'une seconde batterie (9) lorsque le connecteur (604) de l'unité portable est connecté au connecteur (704) de l'unité d'adaptation à travers une ligne d'alimentation dans le câble.
